(19) Europäisches Patentamt
European Patent Office
Office européen des brevets

(11) EP 4 549 776 A1

(12) EUROPÄISCHE PATENTANMELDUNG

(43) Veröffentlichungstag:
07.05.2025 Patentblatt 2025/19

(21) Anmeldenummer: 24208257.6

(22) Anmeldetag: 23.10.2024

(51) Internationale Patentklassifikation (IPC):
F16F 9/32 (2006.01)   F16F 9/18 (2006.01)
F16F 9/20 (2006.01)   B62K 25/08 (2006.01)
B62J 45/41 (2020.01)   B62J 45/42 (2020.01)

(52) Gemeinsame Patentklassifikation (CPC):
F16F 9/3292; B62J 45/41; B62J 45/42;
B62K 25/08; F16F 9/182; F16F 9/20

(84) Benannte Vertragsstaaten:
AL AT BE BG CH CY CZ DE DK EE ES FI FR GB
GR HR HU IE IS IT LI LT LU LV MC ME MK MT NL
NO PL PT RO RS SE SI SK SM TR
Benannte Erstreckungsstaaten:
BA
Benannte Validierungsstaaten:
GE KH MA MD TN

(30) Priorität: 03.11.2023 DE 102023130444

(71) Anmelder: KTM AG
5230 Mattighofen (AT)

(72) Erfinder: WIMMER, Johannes
84556 Kastl (DE)

(74) Vertreter: Söllner, Udo
PATLECTOR Patentanwaltskanzlei
Freundorferstr. 34c
85598 Baldham (DE)

(54) **TELESKOPFEDERGABEL MIT ZWEI TELESKOPGABELBEINEN**

(57) Es ist eine Teleskopfedergabel (1) vorgesehen mit zwei Teleskopgabelbeinen (2), die jeweils mit einem Außenrohr (7) mit einer Axiallängserstreckung und einem relativ dazu in Richtung der Axiallängserstreckung axial verlagerbaren Innenrohr (8) mit einer Axiallängserstreckung versehen sind, wobei ein Teleskopgabelbein (2) ein mit einer Federeinrichtung (10) versehenes Teleskopfedergabelbein (3) ist und ein Teleskopgabelbein (2) ein mit einer Dämpfereinrichtung (22) versehenes Teleskopdämpfergabelbein (4) ist, welches einen an einer Kolbenstange (24) angeordneten Kolben (25) aufweist, und die Teleskopfedergabel (1) mit einer Wegmesseinrichtung (25) versehen ist, welche zur Erfassung der Wegstrecke der Axialverlagerung des Innenrohrs (8) relativ zum Aussenrohr (7) eingerichtet ist, wobei die Wegmesseinrichtung (25) eine in einem Innenraum (26) der Kolbenstange (24) angeordnete magnetooperative Sensoreinrichtung (27) und mindestens eine zur Sensoreinrichtung (27) radial beabstandete Magneteinrichtung (28) aufweist.

FIG. 1

EP 4 549 776 A1

**Beschreibung**

Die vorliegende Erfindung betrifft eine Teleskopfedergabel mit zwei Teleskopgabelbeinen, die jeweils mit einem Außenrohr mit einer Axiallängserstreckung und einem relativ dazu in Richtung der Axiallängserstreckung axial verlagerbaren Innenrohr mit einer Axiallängserstreckung versehen sind, wobei ein Teleskopgabelbein ein mit einer Federeinrichtung versehenes Teleskopfedergabelbein ist und ein Teleskopgabelbein ein mit einer Dämpfereinrichtung versehenes Teleskopdämpfergabelbein ist, welches einen an einer Kolbenstange angeordneten Kolben aufweist und die Teleskopfedergabel mit einer Wegmesseinrichtung versehen ist, welche zur Erfassung der Wegstrecke der Axialverlagerung des Innenrohrs relativ zum Außenrohr eingerichtet ist, nach dem Oberbegriff des Anspruchs 1. Die Erfindung betrifft auch ein Motorrad mit einer solchen Teleskopfedergabel.

Die erfindungsgemäße Teleskopfedergabel ist zur Anordnung an einem Motorrad vorgesehen, bei dem es sich um ein Straßenmotorrad oder auch um ein Geländesportmotorrad handeln kann.

Zur Beeinflussung des Dämpfungsverhaltens einer solchen Teleskopfedergabel mit dem Ziel einer Isolation der Bewegung des Motorrads und hier insbesondere des Vorbaus oder Aufbaus des Motorrads mit der Teleskopfedergabel von störenden Anregungen, wie beispielsweise Fahrbahnunebenheiten und dergleichen, ist die Kenntnis des Federwegs und der Beschleunigung des Aufbaus des Motorrads in Hochachsrichtung des Motorrads als Folge der Anregung von Bedeutung zur Ermittlung der Relativgeschwindigkeit und der Aufbaugeschwindigkeit, da diese Werte Eingangsparameter für die Regelung nach dem Prinzip des sogenannten Skyhook Reglers sind.

Der Federweg wird dabei ermittelt als der Weg von zwei Relativpositionen am Außenrohr und am Innenrohr zueinander infolge der Anregung, also beispielsweise der Weg, den ein am Innenrohr festgelegter Bezugspunkt relativ zu einem am Außenrohr festgelegten Bezugspunkt infolge der Anregung durch beispielsweise eine Fahrbahnunebenheit zurücklegt, und mittels einer numerischen Ableitung des Federwegs nach der Zeit kann dann die Relativgeschwindigkeit ermittelt werden. Es ist daher notwendig, den Federweg zu bestimmen.

Anhand der EP 2 036 746 B1 ist ein Sensormodul mit Beschleunigungssensor für einen Stoßdämpfer eines Personenkraftwagens bekannt geworden. Das Sensormodul ist dabei an einer Ausnehmung einer Führungsbuchse für die Kolbenstange vorgesehen und befindet sich am Stoßdämpfer außen angeordnet.

Anhand der EP 1 964 696 B1 ist ein Stoßdämpfer mit Lagesensor bekannt geworden, bei dem ein Auswertungsmodul ebenfalls an der Außenseite des Stoßdämpfers angeordnet ist und an einer Innenseite des Innenrohrs des Stoßdämpfers entlang der Längsrichtung des Stoßdämpfers Magnete angeordnet sind.

Beide Anordnungen zeichnen sich also dadurch aus, dass das jeweilige Sensormodul am Außenrohr des jeweiligen Stoßdämpfers außen angeordnet ist.

Eine solche Konfiguration ist bei einem Motorrad nachteilig, insbesondere dann, wenn es sich um ein Geländesportmotorrad handelt, welches erheblichen externen Einflüssen, wie beispielsweise Regen und auch Verschmutzungen und möglichen Beschädigungen durch Steine und Staub oder dergleichen ausgesetzt ist. Auch bei einem Straßenmotorrad ist eine exponierte Lage des Sensormoduls an der Außensilhouette des Motorrads von Nachteil aufgrund der Beaufschlagung mit Regen und auch der Gefahr einer Beschädigung des Sensormoduls. Darüber hinaus besteht bei beiden Motorradgattungen die Gefahr einer Beeinflussung der Signalqualität durch die Übertragung von Motorschwingungen auf das extern angeordnete Sensormodul.

Ausgehend hiervon liegt der vorliegenden Erfindung die Aufgabe zugrunde, eine Teleskopfedergabel mit zwei Teleskopgabelbeinen zu schaffen, die eine platzsparende und vor der Gefahr durch Beschädigungen geschützte Anordnung der Sensoreinrichtung ermöglicht. Auch soll ein Motorrad mit einer solchen Teleskopfedergabel bereitgestellt werden.

Die Erfindung weist zur Lösung dieser Aufgabe hinsichtlich der Teleskopfedergabel die im Anspruch 1 angegebenen Merkmale auf. Vorteilhafte Ausgestaltungen hiervon sind in den weiteren Ansprüchen beschrieben. Darüber hinaus weist die Erfindung hinsichtlich des Motorrads die im Anspruch 13 angegebenen Merkmale auf.

Die Erfindung schafft eine Teleskopfedergabel mit zwei Teleskopgabelbeinen, die jeweils mit einem Außenrohr mit einer Axiallängserstreckung und einem relativ dazu in Richtung der Axiallängserstreckung axial verlagerbaren Innenrohr mit einer Axiallängserstreckung versehen sind, wobei ein Teleskopgabelbein ein mit einer Federeinrichtung versehenes Teleskopfedergabelbein ist und ein Teleskopgabelbein ein mit einer Dämpfereinrichtung versehenes Teleskopdämpfergabelbein ist, welches einen an einer Kolbenstange angeordneten Kolben aufweist und die Teleskopfedergabel mit einer Wegmesseinrichtung versehen ist, welche zur Erfassung der Wegstrecke der Axialverlagerung des Innenrohrs relativ zum Außenrohr eingerichtet ist, wobei die Wegmesseinrichtung eine in einem Innenraum der Kolbenstange angeordnete magnetoperative Sensoreinrichtung und mindestens eine zur Sensoreinrichtung radial beabstandete Magneteinrichtung aufweist.

Die erfindungsgemäße Teleskopfedergabel weist zwei Teleskopgabelbeine auf, welche jeweils ein Außenrohr und ein Innenrohr besitzen, welche relativ zueinander verlagerbar sind und zwar in Axiallängsrichtung. Bei einem Teleskopgabelbein handelt es sich um ein Teleskopfedergabelbein und bei dem anderen Teleskopgabelbein handelt es sich um ein Teleskopdämpfergabelbein.

Das Teleskopfedergabelbein besitzt also eine Hauptfeder, welche sich beispielsweise an einer Stange abstützt, welche sich gegen einen Verschlussdeckel abstützt, der beispielsweise das Außenrohr an einem Endbereich abschließt. Damit stützt sich die Hauptfeder am Verschlussdeckel des Außenrohrs ab und kann sich bis in den Endbereich des Innenrohrs erstrecken und dort abstützen oder sich an einer zwischen dem Endbereich des Innenrohrs und der Feder vorgesehenen Hülse abstützen, bei der es sich beispielsweise um einen Hohlkörper handeln kann, was den Vorteil hat, dass damit die Längserstreckung der Federeinrichtung oder Hauptfeder abnimmt und somit die Masse der Hauptfeder abnimmt.

Das Teleskopdämpfergabelbein kann einen an einer Kolbenstange angeordneten Kolben oder Dämpferkolben aufweisen, der bei einer Axialverlagerung des Innenrohrs relativ zum Außenrohr von Dämpfungsfluid durchströmt wird, um Dämpfungsarbeit zu leisten und somit die Relativbewegung des Innenrohrs zu bedämpfen und somit die Federbewegung der Teleskopfedergabel auf eine Anregung von außen hin zu bedämpfen.

Das Teleskopfedergabelbein und das Teleskopdämpfergabelbein können an einem Endbereich an einer Gabelbrücke der Teleskopfedergabel festgelegt sein und am anderen Endbereich über eine Steckachse des Vorderrads des Motorrads miteinander verbunden sein, sodass die Axialverlagerung des Innenrohrs des Teleskopdämpfergabelbeins auch zu einer Axialverlagerung des Innenrohrs des Teleskopfedergabelbeins führt und zwar relativ zum jeweiligen Außenrohr des Teleskopdämpfergabelbeins und des Teleskopfedergabelbeins. Auf diese Weise kann das Teleskopdämpfergabelbein Dämpferarbeit leisten für die Teleskopfedergabel insgesamt, welche zu diesem Zweck nur ein Teleskopdämpfergabelbein aufweisen muss.

Die genannte Axialverlagerung führt dazu, dass ein Bezugspunkt am Innenrohr beispielsweise des Teleskopdämpfergabelbeins bei einer Einfederbewegung oder Ausfederbewegung der Teleskopfedergabel eine Verlagerung relativ zu einem Bezugspunkt am Außenrohr des Teleskopdämpfergabelbeins erfährt. Dies entspricht dem Federweg des Bezugspunkts am Innenrohr relativ zum Bezugspunkt am Außenrohr und zwar auf eine Anregung durch ein Überfahren einer Bodenunebenheit durch das Vorderrad des Motorrads hin.

Bei einer Einfederbewegung der Teleskopfedergabel wird ein solcher Federweg durch die erfindungsgemäß vorgesehene Wegmesseinrichtung erfasst und auch bei der Ausfederbewegung der Teleskopfedergabel wird der Federweg der Bezugspunkte relativ zueinander mittels der erfindungsgemäßen Wegmesseinrichtung erfasst.

Bei der erfindungsgemäßen Teleskopfedergabel besitzt die Wegmesseinrichtung eine in einem Innenraum der Kolbenstange angeordnete magnetooperative Sensoreinrichtung und mindestens eine zur Sensoreinrichtung radial beabstandete Magneteinrichtung.

Diese Konfiguration, bei der sich die Sensoreinrichtung im Innenraum der Kolbenstange des Teleskopdämpfergabelbeins angeordnet befindet, führt dazu, dass die Sensoreinrichtung von Verunreinigungen, Staub und Steinen oder dergleichen geschützt ist und darüber hinaus auch von Störeinflüssen, wie beispielsweise von einer Brennkraftmaschine induzierte Motorschwingungen geschützt ist, da sich die Kolbenstange im Außenrohr des Teleskopdämpfergabelbeins angeordnet befindet, welches mit Dämpferöl gefüllt ist und sowohl das Dämpferöl als auch das metallische Außenrohr als Abschirmung gegen die Motorschwingungen dient.

Obwohl vorstehend ausgeführt ist, dass sich die Sensoreinrichtung in einem Innenraum der hohl ausgebildeten Kolbenstange des Teleskopdämpfergabelbeins angeordnet ist, ist es nach der Erfindung auch vorgesehen, dass die Sensoreinrichtung in einer hohlen Druckstange des Teleskopfedergabelbeins angeordnet ist, an der sich beispielsweise die Hauptfeder des Teleskopfedergabelbeins abstützt. Die Magneteinrichtung kann dann an einer Abstützung oder Aufnahme angeordnet sein, an der sich die Federeinrichtung abstützt. Die Magneteinrichtung kann auch bei dieser Ausbildung oder Ausführungsform der Erfindung zur Sensoreinrichtung radial beanstandet sein oder diese auch radial umgeben.

Die Erfindung sieht daher beide Aufnahmemöglichkeiten für die magnetooperative Sensoreinrichtung vor. Es ist dabei vorgesehen, dass die Wegmesseinrichtung mindestens eine zur Sensoreinrichtung radial beabstandete Magneteinrichtung aufweist.

Bei der zur Sensoreinrichtung radial beabstandeten Anordnung der Magneteinrichtung ist es in vorteilhafter Weise vorgesehen, dass die Sensoreinrichtung ein dreidimensionales Magnetfeld der Magneteinrichtung zur Ermittlung des Federwegs erfassen kann. Die radial beabstandete Anordnung der Magneteinrichtung relativ zur Sensoreinrichtung führt dazu, dass der radiale Abstand zwischen der Sensoreinrichtung und der Magneteinrichtung bei einer Axialbewegung der Magneteinrichtung relativ zur Sensoreinrichtung immer gleich bleibt, da die Sensoreinrichtung in vorteilhafter Weise im Rotationszentrum der Kolbenstange angeordnet ist.

Daher spielt die Drehlage der Magneteinrichtung relativ zur Sensoreinrichtung, welche sich bei der Montage des die Magneteinrichtung und die Sensoreinrichtung aufweisenden Teleskopgabelbeins einstellt, für die spätere Funktionsweise der Federwegerfassung keine Rolle. Dies erleichtert die Montage und reduziert die Fehleranfälligkeit der Montage.

Die Magneteinrichtung kann ein scheibenförmig ausgebildeter Magnet oder beispielsweise auch ein zylinderförmig ausgebildeter Magnet sein. Der radiale Abstand des Magneten zur Sensoreinrichtung führt dazu, dass der radiale Abstand bei der Relativbewegung des Innenrohrs zum Außenrohr gleich bleibt und daher das von der Sensoreinrichtung erfasste Magnetfeld nur von der Relativbewegung des Innenrohrs zum Außenrohr in Axiallängsrichtung des Innenrohrs abhängig ist.

Es ist nach einer Ausführungsform der Erfindung auch möglich, dass die Magneteinrichtung ein Ringmagnet ist, welcher die Sensoreinrichtung radial umgibt. Ein solcher Ringmagnet erzeugt ein dreidimensionales Magnetfeld, welches von der magnetooperative Sensoreinrichtung erfasst wird und zur Ermittlung des Federwegs ausgewertet wird. Die Ermittlung des Federwegs kann nach der Erfindung von einer mit der magnetooperativen Sensoreinrichtung einstückig ausgebildeten Auswerteeinrichtung erfolgen oder auch beispielsweise mittels einer Steuereinrichtung, die am Motorrad vorgesehen ist, also beispielsweise einer Einrichtung, welche den Federweg ermittelt und gleichzeitig Steuersignale zur Ansteuerung einer elektromagnetischen Spule bereitstellt, mit der ein Steuerventil oder Steuerventile am Dämpfungskolben des Teleskopdämpfergabelbeins angesteuert werden, um die Öffnungscharakteristik des Steuerventils zu beeinflussen, also beispielsweise welcher Spaltraum vom Steuerventils zum Durchtritt von Dämpfungsfluid freigegeben wird oder über welchen Zeitraum der Spaltraum freigegeben wird, da damit die Dämpfungsarbeit des Teleskopdämpfergabelbeins den jeweiligen Anforderungen entsprechend angepasst werden kann. Bei dieser Steuereinrichtung kann es sich um eine im Motorsteuergerät des Motorrads angeordnete Einrichtung handeln oder beispielsweise auch ein separates Fahrwerkssteuergerät oder einen Fahrwerksregler.

Die magnetooperative Sensoreinrichtung ist dabei in der Lage, das dreidimensionale Magnetfeld der Magneteinrichtung zu erfassen. Von der Magneteinrichtung, beispielsweise dem genannten Ringmagnet, oder dem zylinderförmig ausgebildeten Magneten oder einem scheibenförmig ausgebildeten Magneten geht ein dreidimensionales Magnetfeld aus, welches eine vorbestimmte Ausdehnung oder Erstreckung in den drei Raumrichtungen um den Magneten herum besitzt. Der zylinderförmig ausgebildete Magnet besitzt eine sich entlang der Zylinderhochachse erstreckende Mittelachse, welche im Winkel, also beispielsweise rechtwinklig zur Mittelachse der Kolbenstange ausgerichtet ist. Der zylinderförmig ausgebildete Magnet kann also beispielsweise an einer Deckeleinrichtung oder einem Deckel oder einem Verschlussdeckel angeordnet sein, der einen oberen Endbereich des Innenrohrs des Teleskopgabelbeins abschließt und zwar beispielsweise in einer Ausnehmung eines Außenumfangsbereichs der Deckeleinrichtung, wobei die Ausnehmung eine Innenumfangsmantelfläche aufweist, die zur Aufnahme der Au-ßenumfangsmantelfläche des zylinderförmig ausgebildeten Magneten eingerichtet ist.

In Abhängigkeit des von der Teleskopfedergabel bereitgestellten Federwegs, der bei einem Geländesportmotorrad beispielsweise bis zu 350 Millimeter betragen kann, ist es nach der Erfindung vorgesehen, dass die erfindungsgemäße Sensoreinrichtung mehrere Sensorelemente entlang der Längserstreckung der Sensoreinrichtung aufweist.

Diese Konfiguration führt dazu, dass bei einer Fahrt des mit der erfindungsgemä-ßen Teleskopfedergabel ausgestatteten Motorrads über eine Bodenunebenheit, welche zu einer Einfederbewegung der Teleskopfedergabel von beispielsweise 175 Millimeter führt, die Magneteinrichtung bei der Einfederbewegung an mehreren Sensorelementen vorbeigeführt wird. Jedes Sensorelement besitzt dabei einen vorbestimmten Erfassungsbereich, der einem Federweg von insbesondere etwa 35 Millimeter entspricht. Die Erfindung sieht daher vor, dass bei einem möglichen Federweg von 350 Millimeter entlang der Längserstreckung der Sensoreinrichtung mehrere, beispielsweise bis zu zehn Sensorelemente an der Sensoreinrichtung vorgesehen sind, wobei jedes Sensorelement in Axiallängsrichtung des Teleskopgabelbeins einen Erfassungsbereich von etwa 35 Millimeter Federweg aufweist.

Die Zahl der Sensorelemente kann daher dem gewünschten Erfassungsbereich beziehungsweise gewünschten Federweg des mit der erfindungsgemäßen Teleskopfedergabel ausgestatteten Motorrads angepasst werden.

Dadurch, dass die Magneteinrichtung zur Sensoreinrichtung radial beabstandet ist oder diese auch radial umgibt, wie beispielsweise bei einer als Ringmagnet ausgebildeten Magneteinrichtung, ist der radiale Abstand zwischen der Magneteinrichtung und den Sensorelementen immer gleich und das Effektivmagnetfeld nur abhängig von der Verschiebung der Magneteinrichtung in Axiallängsrichtung der Sensorelemente. Durch den Abstand zwischen der Magneteinrichtung und dem Sensorelement oder mehreren Sensorelementen und der Feldstärke der Magneteinrichtung ergibt sich ein nutzbarer Messbereich in Axiallängsrichtung. Durch eine Anordnung von mehreren Sensorelementen entlang der Axiallängsrichtung der Sensoreinrichtung kann der gewünschte gesamte Erfassungsbereich der Sensoreinrichtung eingestellt werden, beispielsweise entsprechend dem vorstehend erwähnten möglichen Federweg der erfindungsgemäßen Teleskopfedergabel.

Da die Magneteinrichtung zur Sensoreinrichtung radial beabstandet angeordnet ist, ist die Erfassung des Magnetfelds durch die Sensoreinrichtung, also das Sensorelement oder die Sensorelemente unabhängig vom Rotationswinkel oder der Drehwinkellage der Magneteinrichtung um die Sensoreinrichtung herum. Eine etwaige Veränderung der Drehlage der Magneteinrichtung relativ zur Sensoreinrichtung führt daher nicht zu einer Veränderung des von der Sensoreinrichtung erfassten Magnetfelds.

Bei dem Sensorelement oder den Sensorelementen kann es sich um einen Hallsensor oder Hallsensoren handeln, welche zur dreidimensionalen Erfassung eines Magnetfelds eingerichtet sind.

Es ist nach einer Weiterbildung der Erfindung auch vorgesehen, dass das Innenrohr des Teleskopdämpfergabelbeins einen im Außenrohr angeordneten Endbereich aufweist und der Endbereich mit einer Deckeleinrichtung versehen ist, welcher von der Kolbenstange durchsetzt ist und sich die Magneteinrichtung an einem Außenumfangsbereich der Deckeleinrichtung drehfest angeordnet befindet.

Bei einer axialen Relativbewegung des Innenrohrs zum Außenrohr kommt es zu einer Verlagerung der Deckeleinrichtung mit der Magneteinrichtung relativ zur Kolbenstange und daher auch relativ zur Sensoreinrichtung mit dem oder den Sensorelementen, die in der Kolbenstange angeordnet ist.

Dadurch verändert sich das von dem oder den Sensorelementen erfasste Magnetfeld entlang der Axiallängsrichtung der Kolbenstange. Die Position der Magneteinrichtung stellt daher einen Bezugspunkt für die Sensoreinrichtung dar, dessen axiale Lageveränderung von der Sensoreinrichtung mittels des oder der Sensorelemente erfasst wird, woraus der bei der aktuellen Axialverlagerung des Innenrohrs relativ zum Außenrohr zurückgelegte Weg zwischen dem Bezugspunkt in seiner Ausgangslage und dem Bezugspunkt in seiner Endlage, also dem Ende der Wegstrecke, den der Bezugspunkt bei der Einfederbewegung zurückgelegt hat, bestimmt ist. Daraus ergibt sich der zurückgelegte Federweg $s_{rel}$ und daraus kann wiederum über die numerische Ableitung des Federwegs nach der Zeit die Relativgeschwindigkeit $v_{rel}$ der Einfederbewegung ermittelt werden.

Über eine zusätzliche Erfassung des Werts der Aufbaubeschleunigung $a_{body}$ des Aufbaus des Motorrads mittels eines Beschleunigungssensors und die numerische Integration über die Zeit kann die Aufbaugeschwindigkeit $v_{body}$ des Aufbaus des Motorrads ermittelt werden.

Die so ermittelten Werte gehen dann in die Bestimmung der minimalen Dämpfung $c_{min}$ und der maximalen Dämpfung $c_{max}$ ein, woraus nach dem nachfolgenden Zusammenhang eines Skyhook Reglers

$$\begin{array}{lll} c_{\min} & \text{if} & v_{\text{body}} \cdot v_{\text{rel}} \leq 0 \\ c_{\max} & \text{if} & v_{\text{body}} \cdot v_{\text{rel}} > 0 \end{array}$$

die gewünschte Dämpfung c für die Bedämpfung der Einfederbewegung bestimmt werden kann.

Es ist nach einer Weiterbildung der Erfindung vorgesehen, dass die Sensoreinrichtung ein lang gestrecktes Gehäuse mit einer Innenausnehmung aufweist, in der eine lang gestreckte Platine mit entlang der Längsrichtung der Platine im Abstand zueinander vorgesehenen Hallsensoren angeordnet ist und die Platine mit den Hallsensoren in der Innenausnehmung mit einer Vergussmasse vergossen sind.

Bei der Platine kann es sich um eine gedruckte Leiterplatte handeln, welche Leiterbahnen zur Versorgung der daran im Abstand zueinander angeordneten Hallsensoren mit elektrischer Energie besitzt. Die Platine kann darüber hinaus Anschlußelemente zum Anschluss von Anschlussleitungen zum Einbringen der elektrischen Energie besitzen. Die Platine kann zusammen mit den Hallsensoren in dem lang gestreckten Gehäuse angeordnet sein und zwar in der Innenausnehmung des Gehäuses, wobei die Innenausnehmung nach der Anordnung der Platine mit den Hallsensoren mit einer Vergussmasse vergossen wird. Die Vergussmasse sorgt dafür, dass die Platine mit den Hallsensoren in dem Gehäuse sicher gehalten wird und darüber hinaus gegen Stöße oder Erschütterungen oder Schwingungen, die von einer Brennkraftmaschine des mit der erfindungsgemäßen Teleskopfedergabel ausgestatteten Motorrads stammen. Damit wird die Qualität der von den Hallsensoren über Leiterbahnen auf der Platine abgegebenen Signale, welche sich aus der Erfassung des vorstehend erwähnten Magnetfelds ergeben, weiter verbessert.

Auf der vorstehend erwähnten gedruckten Leiterplatte kann auch der bereits erwähnte Beschleunigungssensor angeordnet sein, mit dem die Beschleunigung des Aufbaus des Motorrads erfasst werden kann, die in die vorstehend erwähnte Skyhook Regelung zur Ermittlung der gewünschten Dämpfung eingeht.

Die Wegsignale und das Beschleunigungssignal werden über auf der gedruckten Leiterplatte angeordnete Leitungen und die ebenfalls bereits erwähnten Anschlussleitungen, die platinenseitig in die Innenausnehmung der Kolbenstange führen beispielsweise als Pulswellen moduliertes Signal zu einer Auswerteeinrichtung geführt, bei der es sich beispielsweise um den bereits vorstehend erwähnten Fahrwerksregler handeln kann.

Es ist nach einer Weiterbildung der Erfindung vorgesehen, dass das Gehäuse mit einem Kunststoffwerkstoff gebildet ist und an beiden gegenüberliegenden Endbereichen eine Endfläche aufweist, welche kreisförmig ausgebildet ist und eine Endfläche mit einem Durchlass versehen ist, welcher zur Aufnahme von elektrischen Anschlussmitteln eingerichtet ist.

Damit wird ein Gehäuse geschaffen, welches form- und flächenkomplementär zu dem Innenraum der Kolbenstange ausgebildet sein kann. Durch diese Konfiguration kann das Gehäuse mit der Sensoreinrichtung beispielsweise formschlüssig in der Kolbenstange angeordnet und dort festgelegt werden, sodass vermieden wird, dass sich das Gehäuse in der Innenausnehmung bewegen kann, was dazu führen könnte, dass die im Gehäuse angeordnete Sensoreinrichtung beschädigt werden würde.

Eine Endfläche des Gehäuses ist mit einem Durchlass versehen, der von elektrischen Anschlussmitteln für die Sensoreinrichtung versehen ist, also beispielsweise für die vorstehend erwähnten 3D Hallsensoren. Darüber hinaus können diese Anschlussmittel, also beispielsweise elektrische Anschlussleitungen auch eine Leitung zur Bestromung eines elektromagnetisch betätigten Solenoids umfassen, der zur Ansteuerung von Ventilshims zur Steuerung des Durchflusses von Dämpfungsöl durch den Dämpferkolben vorgesehen ist.

Es ist nach einer Weiterbildung der Erfindung auch vorgesehen, dass die Sensoreinrichtung in der Drehachse der Kolbenstange angeordnet ist und zur Erfassung des dreidimensionalen Magnetfelds der sich relativ zur Sensoreinrichtung bewegenden Magneteinrichtung ausgebildet ist.

Damit kann die Sensoreinrichtung das vom der Magneteinrichtung erzeugte Magnetfeld in allen drei Raumrichtungen erfassen und daraus Signale erzeugen, die zu einer Auswerteeinrichtung in der Form des beispielsweise vorstehend erwähnten Fahrwerkreglers weitergeleitet werden. Der Fahrwerksregler wertet diese Signale aus, welche aufgrund des Merkmals, dass sich die Sensoreinrichtung in der Drehachse der Kolbenstange angeordnet befindet, unabhängig ist von der Drehlage der Kolbenstange relativ zum Ringmagneten.

Die Längsachse der Sensoreinrichtung kann als X-Achse definiert werden und entspricht auch der Längsachse des mit der Sensoreinrichtung versehenen Teleskopgabelbeins. Diese Längsachse befindet sich im Rotationszentrum des genannten Teleskopgabelbeins, also beispielsweise des Teleskopdämpfergabelbeins.

Bei einem kartesischen Koordinatensystem steht die Z-Y Ebene senkrecht auf der X-Achse und es kann mit der Sensoreinrichtung das Effektivmagnetfeld $B_{eff}$ in der Z-Y Ebene erfasst werden und zwar nach der Formel

$$B_{eff} = \sqrt{B_z{}^2 + B_y{}^2}$$ .

Dadurch, dass der radiale Abstand zwischen dem Magneten und dem jeweiligen Sensorelement der Sensoreinrichtung, also beispielsweise dem genannten Hallsensor oder den genannten Hallsensoren, immer gleich bleibt, da sich das Sensorelement oder die Sensorelemente im Rotationszentrum des die Kolbenstange aufweisenden Gabelrohrs befindet, ist der Wert des Effektivmagnetfelds $B_{eff}$ nur abhängig von der Verschiebung oder Axialverlagerung der Magneteinrichtung entlang der X-Achse und unabhängig vom Rotationswinkel der Magneteinrichtung, also beispielsweise des Magneten oder Ringmagneten um das Sensorelement oder um die Sensorelemente herum.

Durch den Abstand zwischen dem Magneten und dem Sensorelement oder den Sensorelementen und der Feldstärke des Magneten ergibt sich ein nutzbarer Messbereich entlang der X-Achse, der beispielsweise etwa 35 Millimeter betragen kann.

Für größere Messbereiche werden, wie dies vorstehend bereits erwähnt ist, mehrere Sensorelemente entlang der Platine oder Leiterplatte angeordnet. Durch die Erfassung des Magnetfelds in X Richtung, also $B_x$ und die Erfassung des Effektivmagnetfelds $B_{eff}$ kann innerhalb des Messbereichs eine eindeutige Bestimmung des Bezugspunkts entlang der X-Achse vorgenommen werden, die Verlagerung des Bezugspunkts entlang der X-Achse bei einer Einfederbewegung oder einer Ausfederbewegung der Teleskopfedergabel ist damit bestimmbar und damit der Betrag der Einfederbewegung oder Ausfederbewegung.

Es ist nach einer Weiterbildung der Erfindung auch vorgesehen, dass die Sensoreinrichtung einen Beschleunigungssensor aufweist, der zur Erfassung der Beschleunigung des Fahrzeugaufbaus eines mit der Teleskopfedergabel versehenen Fahrzeugs, insbesondere Motorrads eingerichtet ist.

Der Beschleunigungssensor kann dabei in vorteilhafter Weise auf der bereits erwähnten Platine angeordnet sein und wird über diese auch mit elektrischer Energie versorgt. Die vom Beschleunigungssensor ermittelten Beschleunigungssignale werden über die Platine und die bereits erwähnten Anschlussleitungen oder Anschlussmittel an eine Auswerteeinrichtung weitergeleitet, bei der es sich beispielsweise um den bereits erwähnten Fahrwerkregler handeln kann.

Es ist nach einer Weiterbildung der Erfindung auch vorgesehen, dass das Teleskopfedergabelbein an einem Endbereich eine Klemmfaust für eine Vorderradachse eines Motorrads aufweist und am in Längsrichtung des Teleskopfedergabelbeins gegenüberliegenden Endbereich einen das Außenrohr verschließenden Deckel besitzt, der an einer dem Endbereich des Innenrohrs gegenüberliegenden Fläche mit einem O-Ring versehen ist.

Damit wird eine Konfiguration des Teleskopfedergabelbeins erreicht, bei dem ein Endanschlag für das Innenrohr von dem O-Ring bereitgestellt ist, der an dem das Außenrohr verschließenden Deckel angeordnet ist. Das Innenrohr gleitet relativ zur Innenumfangsfläche des Außenrohrs bei einer Axialbewegung des Innenrohrs relativ zum Außenrohr, sodass an der Federstange, welche zur Abstützung der Hauptfeder oder Druckfeder vorgesehen ist und sich am Deckel des Außenrohrs abstützt, keine Gleitoberfläche notwendig ist, und somit eine kostengünstige Konfiguration des Teleskopfedergabelbeins geschaffen ist.

Es ist nach einer Weiterbildung der Erfindung vorgesehen, dass das Teleskopfedergabelbein an einem Endbereich des Innenrohrs einen mit einem Durchlass zur Aufnahme einer Druckstange versehenen Deckel aufweist und sich die Federeinrichtung an einem Endbereich an der Druckstange abstützt und am gegenüberliegenden Endbereich an einem im Innenrohr angeordneten hülsenförmigen Körper abstützt.

Bei der Druckstange kann es sich um die vorstehend bereits erwähnte Federstange handeln und mit dem hülsenförmigen Körper, an dem sich die Hauptfeder abstützen kann, wird erreicht, dass eine Hauptfeder mit geringerer axialer Länge eingesetzt werden kann als ist der Fall wäre, wenn sich die Hauptfeder bis in den Bereich einer Klemmfaust für die Vorderachse erstrecken würde. Diese Konfiguration führt also dazu, dass die Masse des Teleskopfedergabelbeins verringert werden kann.

Es ist nach einer Weiterbildung der Erfindung auch vorgesehen, dass das Teleskopdämpfergabelbein als Doppelstangendämpfer ausgebildet ist und eine in einem Dämpferrohr angeordnete zweite Stange besitzt, welche sich am Dämpferkolben abstützt und deren Außendurchmesser kleiner ist als der Außendurchmesser der Kolbenstange.

Der Stangendurchmesser der zweiten Stange sorgt dafür, dass bei einer Federbewegung weniger Dämpfungsfluid, also Dämpfungsöl durch das Ventil hindurchströmen muss und somit bei mit großen Federwegen ausgestatteten Teleskopfedergabeln, welche vornehmlich im Offroad Einsatz, also beispielsweise bei Motocross Motorrädern eingesetzt werden, sodass damit auch eine Gewichtsreduzierung der Gesamtmasse der Teleskopfedergabel realisiert werden kann.

Es ist nach einer Weiterbildung der Erfindung auch vorgesehen, dass das Teleskopdämpfergabelbein eine elektrisch betätigbare Spule oder Magnetspule aufweist. Diese Spule oder Magnetspule kann mittels der bereits erwähnten Anschlussleitungen mit elektrischer Energie versorgt werden, um einen Aktuator zu betätigen, der wiederum Ventilscheiben oder Ventilshims betätigt, mittels deren Betätigung der Durchströmungsquerschnitt durch den Ventilkörper beeinflusst werden kann, um die von der Dämpfereinrichtung geleistete Dämpferarbeit steuern zu können.

Es ist nach einer Weiterbildung der Erfindung auch vorgesehen, dass die Teleskopfedergabel mindestens eine Gabelbrücke aufweist, welche zur Aufnahme der Teleskopgabelbeine eingerichtet ist. Die Gabelbrücke kann zu diesem Zweck zwei Aufnahmeöffnungen aufweisen, in welche die Teleskopgabelbeine eingeführt werden können und von den Aufnahmeöffnungen umschlossen sind und darin lösbar festgelegt sind. Bei einer Ausführungsform der erfindungsgemäßen Teleskopfedergabel sind die Teleskopgabelbeine mit einer oberen und einer im Abstand dazu angeordneten unteren Gabelbrücke versehen.

Schließlich ist nach der Erfindung auch noch ein Motorrad mit einem Vorderrad und einem Hinterrad sowie einem Fahrersattel und einer Antriebseinheit vorgesehen, bei der es sich beispielsweise um eine Brennkraftmaschine oder eine elektrische Antriebseinheit handelt kann, wobei das Motorrad eine Teleskopfedergabel aufweist, an der sich das Vorderrad des Motorrads abstützt.

Die Erfindung wird im Folgenden anhand der Zeichnung näher erläutert. Diese zeigt in:

Fig. 1 eine Längsschnittansicht einer Teleskopfedergabel gemäß einer Ausführungsform nach der vorliegenden Erfindung;

Fig. 2 eine Längsschnittansicht eines Teleskopdämpfergabelbeins der Teleskopfedergabel nach Fig. 1;

Fig. 3 eine Längsschnittansicht eines Teleskopfedergabelbeins der Teleskopfedergabel nach Fig. 1;

Fig. 4 eine vergrößerte Darstellung des Ausschnitts IV nach Fig. 2;

Fig. 5 eine Längsschnittansicht eines Teleskopfedergabelbeins nach einer zweiten Ausführungsform;

Fig. 6 eine perspektivische Darstellung einer Sensoreinrichtung;

Fig. 7 eine Explosionsdarstellung der Sensoreinrichtung nach Fig. 6; und

Fig. 8 eine Seitenansicht eines mit der Teleskopfedergabel ausgestatteten Motorrads.

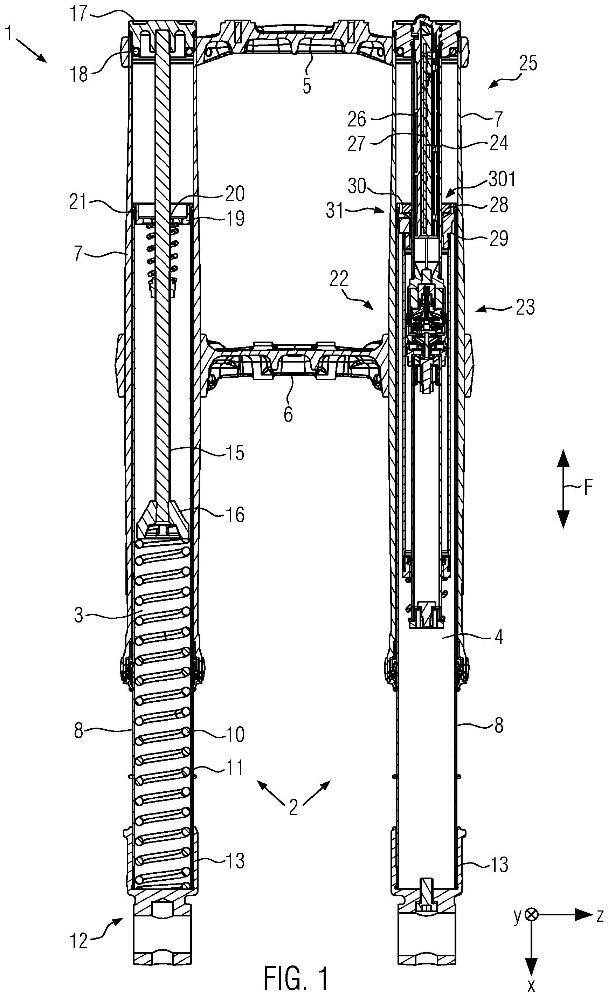

Fig. 1 der Zeichnung zeigt eine Längsschnittansicht einer Teleskopfedergabel 1 mit zwei Teleskopgabelbeinen 2 nach einer Ausführungsform gemäß der vorliegenden Erfindung.

Bei dem in der Zeichnungsebene linken Teleskopgabelbein 2 handelt es sich um ein Teleskopfedergabelbein 3 und bei dem in der Zeichnungsebene rechten Teleskopgabelbein 2 handelt es sich um ein Teleskopdämpfergabelbein 4.

Darüber hinaus besitzt die Teleskopfedergabel 1 eine obere Gabelbrücke 5 sowie eine untere Gabelbrücke 6, mittels deren die beiden Teleskopgabelbeine 2 lösbar miteinander verbunden sind.

Das Teleskopfedergabelbein 3 besitzt ein Außenrohr 7 und ein Innenrohr 8, wobei das Innenrohr 8 relativ zum Außenrohr 7 in Richtung dessen Axiallängserstreckung gemäß dem Pfeil F nach Fig. 1 des Aussenrohrs 7 axial verlagert werden kann, beispielsweise in der Folge einer Fahrt des mit der erfindungsgemäßen Teleskopfedergabel 1 ausgestatteten Motorrads 9.

In ähnlicher Weise besitzt auch das Teleskopdämpfergabelbein 4 ein Außenrohr 7 sowie ein Innenrohr 8, welches bei einer Fahrt des Motorrads 9 relativ zum Außenrohr 7 ebenfalls in Richtung der Axiallängserstreckung gemäß dem Pfeil F axial verlagert werden kann. Beide Innenrohre 8 können daher eine Einfederbewegung und eine Ausfederbewegung relativ zum jeweiligen Außenrohr 7 ausführen.

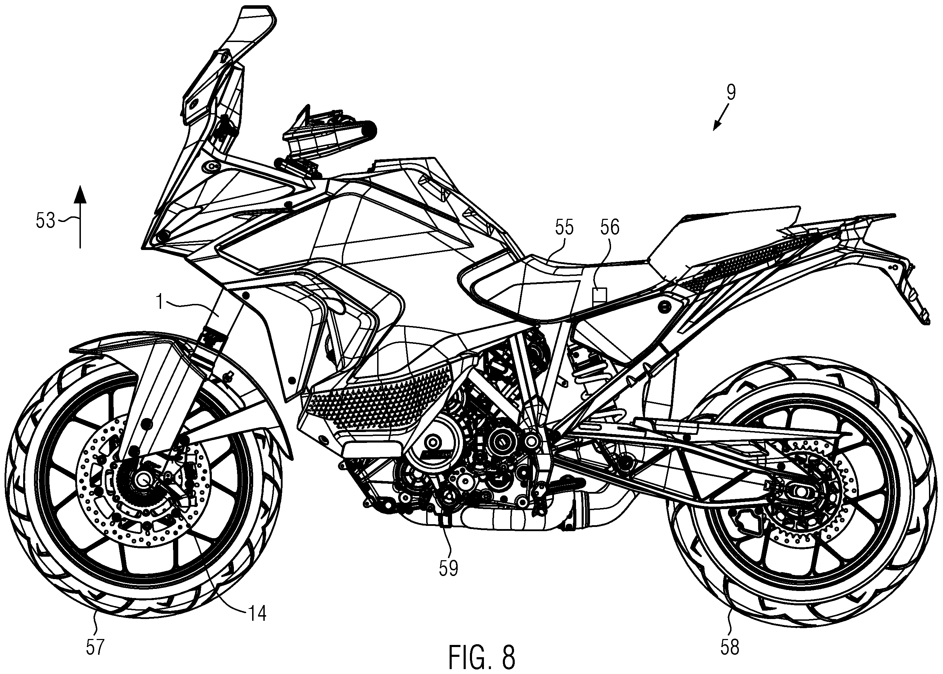

Das Teleskopfedergabelbein 3 weist eine Federeinrichtung 10 in der Form einer Hauptfeder 11 auf, welche sich an dem in der Zeichnungsebene unteren Endbereich 12 an dem Innenrohr 8 abstützt, wobei sich das Innenrohr 8 an einer Klemmfaust 13 abstützt, welche zur Aufnahme und lösbaren Festlegung einer Vorderradachse 14 ausgebildet ist, die anhand von Fig. 8 der Zeichnung ersichtlich ist.

Die Hauptfeder 11 stützt sich an dem Endbereich, welcher der Klemmfaust 13 gegenüberliegt, an einer Aufnahme 16 ab, die sich wiederum an einer Druckstange 15 abstützt, welche sich wiederum an einem Deckel 17 abstützt, der das Außenrohr 7 abschließt, wie dies anhand von Fig. 1 der Zeichnung ersichtlich ist.

An der Unterseite des Deckels 17 ist ein O-Ring 18 vorgesehen, der als Endanschlag für das Innenrohr 8 bei einer Einfederbewegung des Innenrohrs 8 bis in den Bereich des Deckels 17 dient.

Das Innenrohr 8 des Teleskopfedergabelbeins 3 ist an dem der Klemmfaust 13 gegenüberliegenden Endbereich über einen Deckel 19 verschlossen, der einen Durchlass 20 für die Aufnahme der Druckstange oder Federstange 15 besitzt.

Der Deckel 19 kann mit seinem Außenumfangsrand 21 an dem O-Ring 18 zur Anlage kommen, sodass der vorstehend bereits erwähnte Endanschlag für die Einfederbewegung des Innenrohrs 8 relativ zum Außenrohr 7 des Teleskopfedergabelbeins 3 ermöglicht ist. Da sich die beiden Teleskopgabelbeine 2 bei einer Einfederbewegung gemeinsam bewegen, dient der so realisierte Endanschlag auch gleichzeitig als Begrenzung der Einfederbewegung des Teleskopdämpfergabelbeins 4.

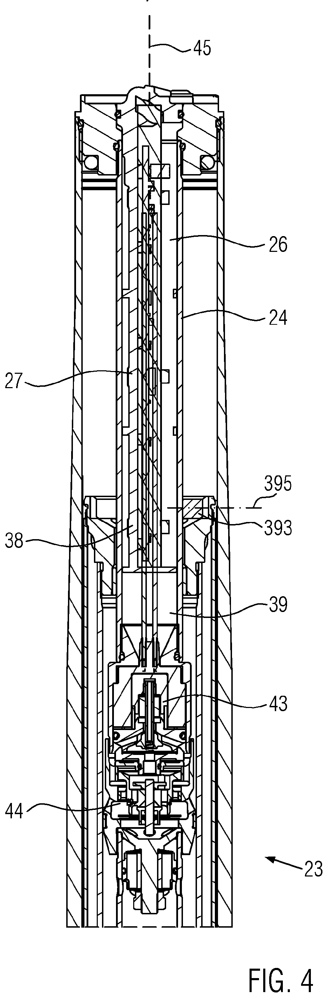

Das Teleskopdämpfergabelbein 4 ist mit einer Dämpfereinrichtung 22 versehen, die als Doppelstangendämpfer 34 ausgebildet ist. Diese weist einen Kolben 23 auf, der an einer Kolbenstange 24 angeordnet ist, wie dies anhand von Fig. 1 und Fig. 4 der Zeichnung ersichtlich ist.

Das Innenrohr 8 des Teleskopdämpfergabelbeins 4 ist an der in der Zeichnungsebene liegenden Unterseite wiederum an einer Klemmfaust 13 angeordnet, wie dies vorstehend bereits für das Teleskopfedergabelbein erläutert wurde, die beiden Klemmfäuste 13 dienen also der Anordnung der in Fig. 8 der Zeichnung dargestellten Vorderradachse 14 des Motorrads 9.

Die Teleskopfedergabel 1 weist eine Wegmesseinrichtung 25 auf, welche zur Erfassung der Wegstrecke der Axialverlagerung des Innenrohrs 8 relativ zum Außenrohr 7 eingerichtet ist.

Mit der Wegmesseinrichtung 25 kann also die Wegstrecke eines auf dem Innenrohr 8 liegenden Bezugspunkt relativ zu einem auf dem Außenrohr 7 liegenden Bezugspunkt bei einer Einfederbewegung und auch einer Ausfederbewegung der erfindungsgemäßen Teleskopfedergabel 1 ermittelt werden, es kann also ganz allgemein der Federweg ermittelt werden, den die Teleskopfedergabel 1 bei einer Einfederbewegung beziehungsweise einer Ausfederbewegung erfährt.

Die Kenntnis des Federwegs ist beispielsweise für die Beeinflussung der Dämpfungscharakteristik der Dämpfereinrichtung 22 von Bedeutung. Mit der Dämpfereinrichtung 22 können den entsprechenden Anforderungen des Motorrads 9 oder den Wünschen eines das Motorrad 9 bewegenden Fahrers bezüglich der Dämpfung des Fahrwerks des Motorrads 9 Rechnung getragen werden. Es sind dadurch Fahrprogramme möglich, die unterschiedliche Dämpfungsverhalten der Teleskopfedergabel 1 erfordern. Es kann damit also auch das Feder- und Dämpfungsverhalten des Fahrwerks des Motorrads 9 beeinflusst werden.

Die Wegmesseinrichtung 25 weist eine in einem Innenraum 26 der Kolbenstange 24 angeordnete magnetooperative Sensoreinrichtung 27 auf und eine damit zusammenarbeitende Magneteinrichtung 28, welche zur Sensoreinrichtung 27 radial beabstandet angeordnet ist.

Die Sensoreinrichtung 27 ist in Fig. 1 im Innenraum 26 der Kolbenstange 24 angeordnet dargestellt und die Magneteinrichtung 28 in der Form eines Ringmagneten 29 umgibt die Sensoreinrichtung 27 radial und ist radial beabstandet zur Sensoreinrichtung 27 angeordnet. Bei der dargestellten Ausführungsform ist die Magneteinrichtung 28, 29 in einer Aufnahme 30 einer Deckeleinrichtung 301 am oberen Endbereich 31 des Innenrohrs 8 des Teleskopdämpfergabelbeins 4 angeordnet. Bei der Aufnahme 31 kann es sich beispielsweise um eine Ringnut handeln, welche nach oben offen ausgebildet ist, sodass der Ringmagnet 29 einfach in die Ringnut eingeführt und dort beispielsweise mittels eines Klemmsitzes festgelegt werden kann.

Führt das Innenrohr 8 des Teleskopdämpfergabelbeins 4 bei einer Einfederbewegung oder Ausfederbewegung eine Verlagerungsbewegung des Ringmagneten 29 relativ zur Sensoreinrichtung 27 aus, so führt dies zu einer Veränderung des am jeweiligen Ort in Axiallängsrichtung der Sensoreinrichtung 27 gemessenen Magnetfelds, d. h. die Feldstärke des Magnetfelds ändert sich, woraus nach dem vorstehend bereits erläuterten Zusammenhang das Effektivmagnetfeld $B_{eff}$ ermittelt werden kann, welches zur Bestimmung der in X Richtung nach Fig. 1 gemessenen Verlagerungsbewegung des Bezugspunktes Ringmagnet 29 relativ zu dem oder den Bezugspunkten Sensorelement der Sensoreinrichtung 27 ausgewertet werden kann.

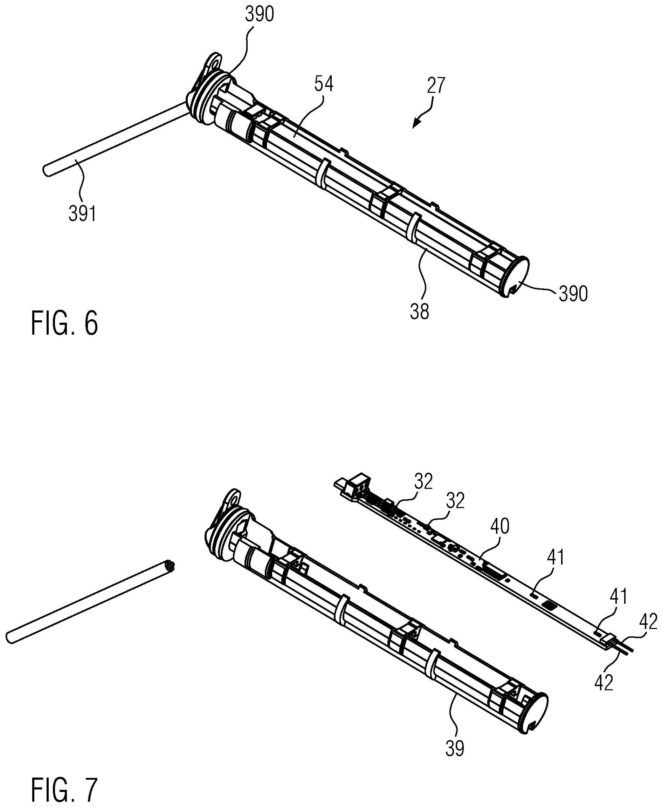

Die Sensoreinrichtung 27 weist also einen Bezugspunkt oder Bezugspunkte in der Form von einem Sensorelement 32 oder entlang der Längsrichtung der Sensoreinrichtung 27 im Abstand zueinander angeordneter Sensorelemente 32 auf, wie dies anhand von Fig. 7 der Zeichnung ersichtlich ist.

Führt der Ringmagnet 29 also bei einer Einfederbewegung oder einer Ausfederbewegung eine Axialverlagerung relativ zu dem oder den Sensorelementen 32 der Sensoreinrichtung 26 aus, so verändert sich das von jedem Sensorelement 32 gemessene Magnetfeld, woraus der jeweilige Betrag der Verlagerungsbewegung des Ringmagneten innerhalb des jeweiligen Messbereichs des jeweiligen Sensorelement 32 ermittelt werden kann und hieraus der Verlagerungsweg und damit der Federweg bestimmt werden kann.

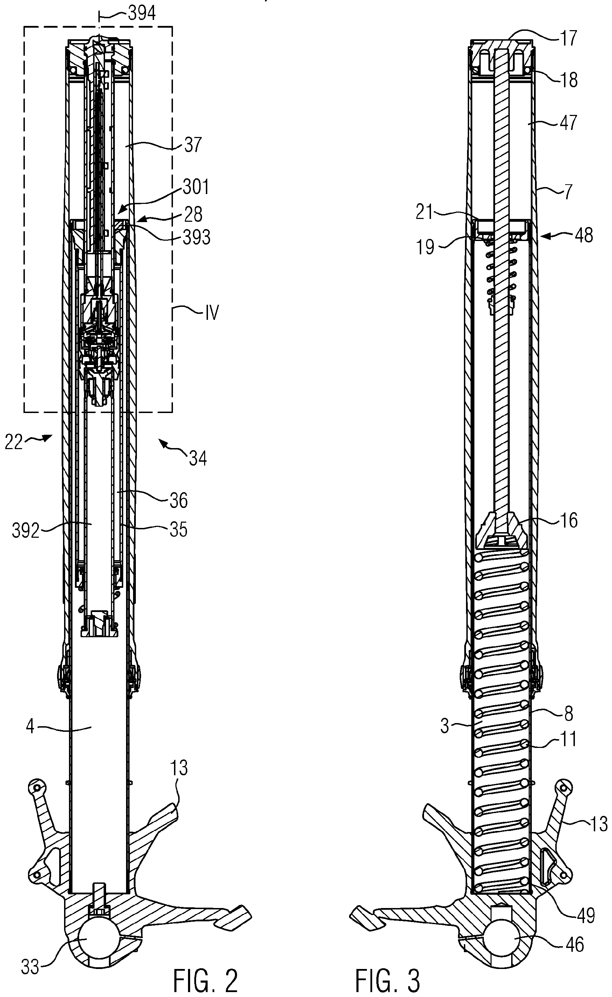

Fig. 2 der Zeichnung zeigt eine Längsschnittansicht des Teleskopdämpfergabelbeins 4 nach Fig. 1 der Zeichnung mit der Klemmfaust 13 und deren Aufnahme 33 für die Vorderachse 14 des Motorrads 9. Bei der Ausführungsform nach Fig. 2 der Zeichnung ist die Magneteinrichtung 28 in der Form eines zylinderförmig ausgebildeten Magneten 393 ausgebildet, der in einer Aufnahme der Deckeleinrichtung 301 angeordnet ist und zwar so, dass die Zylinderlängsachse oder Zylinderhochachse 395 des Magneten 393 rechtwinklig zur Mittelachse 394 der Kolbenstange 24 ausgerichtet verläuft. Dies führt dazu, dass bei einer Axialfederbewegung der Teleskopfedergabel 1 in Richtung des Pfeiles F nach Fig. 1 der Magnet 393 eine Relativbewegung in Richtung des Pfeiles F relativ zur Kolbenstange 24 ausführt, der radiale Abstand zwischen der Sensoreinrichtung 27 und dem Magneten 393 dabei aber gleich bleibt.

Darüber hinaus zeigt die Fig. 2 auch, dass die Dämpfereinrichtung 22 als Doppelstangendämpfer 34 ausgebildet ist mit einem Dämpferrohr 35 und einer ersten Druckkammer 36 sowie einer zweiten Druckkammer 37.

Fig. 4 der Zeichnung zeigt eine vergrößerte Darstellung des Ausschnitts IV nach

Fig. 2 der Zeichnung. Die Kolbenstange 24 nimmt die Sensoreinrichtung 27 im Innenraum 26 der Kolbenstange auf und zwar so, dass sich die näher anhand von

Fig. 6 der Zeichnung ersichtliche Sensoreinrichtung mit dem Gehäuse 38 im Innenraum 26 angeordnet befindet. Das Gehäuse 38 besitzt eine langestreckte Konfiguration, wie dies anhand von Fig. 6 der Zeichnung ersichtlich ist und besitzt an beiden gegenüberliegenden Endbereichen eine jeweilige Endfläche 390, welche kreisförmig ausgebildet ist und zwar form- und flächenkomplementär zur Konfiguration des Innenraums 26 der Kolbenstange 24. Der Außendurchmesser der Endfläche 390 entspricht dabei weitgehend dem Innendurchmesser des Innenraums 26 der kreisringförmigen Kolbenstange 24, sodass die Sensoreinrichtung 27 mit dem Gehäuse 38 in den Innenraum 26 der Kolbenstange 24 eingeführt werden kann und dort radial festgelegt ist. Die in der Zeichnungsebene der Fig. 6 ersichtliche Endfläche 390 weist einen Durchlass zur Aufnahme der dort ersichtlichen Anschlussmittel 391 auf.

Das näher anhand von Fig. 6 der Zeichnung ersichtliche Gehäuse 38 der Sensoreinrichtung 27 wiederum besitzt einen anhand von Fig. 7 der Zeichnung ersichtlichen Innenraum beziehungsweise eine Innenausnehmung 39, in welche die lang gestreckte Platine 40 der Sensoreinrichtung 27 eingesetzt werden kann. Die Platine 40 weist im Abstand zueinander angeordnete Sensorelemente in der Form von 3D Hallsensoren 41 auf, die zur Erfassung des vom Ringmagneten 29 induzierten Magnetfelds eingerichtet sind. Darüber hinaus besitzt die Platine 40 auch zwei Anschlussleitungen 42, welche zur Versorgung des näher anhand von Fig. 4 der Zeichnung ersichtlichen Solenoids 43 mit elektrischer Energie vorgesehen sind. Die Stromversorgung des Solenoids 43 wird also über die Platine 40 durchgeschleift, mit dem Solenoid 43 können die anhand von Fig. 4 der zeichnungsersichtlichen Federscheiben oder Ventilshims 44 so betätigt werden, dass der von den Federscheiben 44 gesteuert oder geregelt freigebbare Öffnungsquerschnitt des Durchlasses des Dämpferkolben 23 verändert werden kann, um das Dämpfungsverhalten der Dämpfereinrichtung 22 zu verändern, wodurch das Dämpfungsverhalten des Teleskopdämpfergabelbeins 4 verändert werden kann und damit das Dämpfungsverhalten der erfindungsgemäßen Teleskopfedergabel 1 insgesamt.

Dadurch, dass die Sensoreinrichtung 27 entlang der in Fig. 4 der Zeichnung ersichtlichen Drehachse 45 der Kolbenstange 24 angeordnet ist, spielt die Relativdrehwinkellage des Ringmagneten 29 relativ zur Kolbenstange 24 keine Rolle und das Effektivmagnetfeld lässt sich eindeutig bestimmen, wie dies an Hand der vorstehend dargestellten Formel bereits erläutert wurde.

Fig. 3 der Zeichnung zeigt eine weitere Ansicht des in Fig. 1 dargestellten Teleskopfedergabelbeins 3. Wie es ohne weiteres ersichtlich ist, besitzt die Klemmfaust 13 eine Aufnahme 46 für die Vorderachse 14 des Motorrads 9. Der Deckel 17 verschließt das Außenrohr 7 und an dem einer Innenausnehmung 47 des Außenrohrs 7 zugeordneten Endbereich ist der vorstehend bereits erwähnte O-Ring 18 angeordnet, der als Endanschlag für den mit dem Deckel 19 verschlossenen Endbereich 48 des Innenrohrs 8 dient. Der Außenumfangsrand 21 des Deckels 19 kann an dem O-Ring 18 zur Anlage kommen, wenn der maximal mögliche Federweg von dem Teleskopfedergabelbein 3 zurückgelegt wurde.

Wie es ohne weiteres anhand der Fig. 3 ersichtlich ist, weist die Hauptfeder 11 eine axiale Längserstreckung auf, die sich von der Aufnahme 16 bis zum Endbereich 49, welcher der Klemmfaust 13 zugeordnet ist, erstreckt.

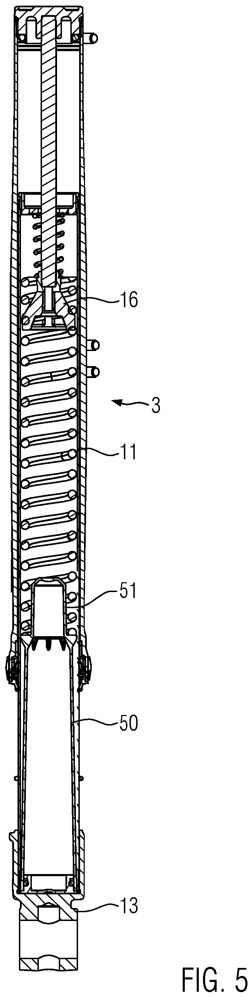

Die in Fig. 5 dargestellte modifizierte Ausführungsform des Teleskopfedergabelbeins 3 weist eine kürzere Hauptfeder 11 auf, welche sich von der Aufnahme 16 bis zu einem hülsenförmigen Körper 50 erstreckt, an dessen stirnseitigem Endbereich 51 die Hauptfeder 11 geführt angeordnet ist. Der hülsenförmige Körper 50 dient als Distanzhülse und Widerlager für die Hauptfeder 11. Dadurch, dass die Hauptfeder 11 bei der Ausführungsform nach Fig. 5 der Zeichnung eine kürzere axiale Längserstreckung besitzt, besitzt sie auch eine geringere Eigenmasse und die Eigenmasse des Teleskopfedergabelbeins 3 insgesamt kann dadurch verringert werden.

An der Platine 40 ist, wie dies anhand von Fig. 7 der Zeichnung ersichtlich ist, ein Beschleunigungssensor 52 angeordnet, mit dem die Beschleunigung des Fahrzeugaufbaus des Motorrads 9 in Hochachsrichtung 53 festgestellt werden kann. Die vom Beschleunigungssensor 52 ermittelten Werte können zusammen mit den von den Hallsensoren 41 ermittelten Werte der magnetischen Feldstärke einem am Motorrad 9 unter der Sitzbank 55 vorgesehenen und in Fig. 8 schematisch dargestellten Steuereinrichtung in der Form eines Fahrwerkreglers 56 zugeführt werden, von dem, dem gewählten Fahrprogramm entsprechend die Dämpfungscharakteristik der Teleskopfedergabel 1 durch die Bestromung des Solenoid 43 gesteuert wird.

Die Platine 40 mit den Sensoren 41, 52 kann ist mit einer Vergussmasse 54 vergossen, was dazu führt, dass sämtliche elektronischen Bauteile auf der Platine 40 von der Vergussmasse 54 eingekapselt sind und somit geschützt sind.

Fig. 8 der Zeichnung zeigt ein Motorrad 9 mit einem Vorderrad 57 sowie einem Hinterrad 58 und der vorstehend bereits erwähnten Sitzbank 55, welche als Fahrersattel dient und einer Antriebseinheit 59 in der Form einer Brennkraftmaschine. Das Motorrad 9 weist die vorstehend ausführlich erläuterte Teleskopfedergabel 1 auf und ist bei der dargestellten Ausführungsform des Motorrads als Straßenmotorrad ausgebildet. Die erfindungsgemäße Teleskopfedergabel 1 zeichnet sich unter anderem durch eine geringe Eigenmasse auf, da beispielsweise nur eine Hauptfeder 11 vorgesehen ist und durch die Ausbildung des Teleskopdämpfergabelbeins 4 als Doppelstangendämpfer nur wenig Dämpfungsfluid zur Bedämpfung der Federbewegung verschoben wird und demnach auch das Volumen an Dämpfungsfluid verringert werden kann, wodurch wiederum die Eigenmasse der erfindungsgemäßen Teleskopfedergabel 1 verringert werden kann.

Die erfindungsgemäße Teleskopfedergabel 1 ist daher auch insbesondere zur Anordnung an einem Geländesportmotorrad vorgesehen, für dessen Einsatz im unbefestigten Gelände die erfindungsgemäße Teleskopfedergabel 1 aufgrund der geringen Eigenmasse von Vorteil ist. Dies gilt auch für die Anwendung der erfindungsgemäßen Teleskopfedergabel 1 an einem Straßenmotorrad.

Die erfindungsgemäße Teleskopfedergabel zeichnet sich darüber hinaus dadurch aus, dass die zur Versorgung des Solenoids mit elektrischer Energie notwendige Versorgungsleitung und die Anschlussleitungen für die Sensoreinrichtung zu einer einzigen Steckereinrichtung zusammengeführt werden können und somit nur eine einzige Steckereinrichtung am Teleskopdämpfergabelbein benötigt wird. Die Sensoreinrichtung ist in der hohlen Kolbenstange integriert, wodurch der ansonsten ungenutzte Innenraum der Kolbenstange genutzt wird. Darüber hinaus ist die Sensoreinrichtung in der Kolbenstange gegen Verschmutzungen und Vibrationen und Stöße geschützt untergebracht.

Die erfindungsgemäße Teleskopfedergabel besitzt eine hohe Offroad Tauglichkeit, da nur eine einzige Steckerverbindung benötigt ist, wie dies vorstehend bereits erläutert wurde und kann darüber hinaus auch mit einer zusätzlichen Luftfeder ausgestattet werden, welche als Luftfedereinheit im Teleskopfedergabelbein integriert werden kann.

Der O-Ring am oberen Verschlussdeckel des Teleskopfedergabelbeins dient als Endanschlag und der Deckel im Innenrohr kann als Zuganschlag dienen. Die Druckstange oder Federstange, an der sich die Hauptfeder des Teleskopfedergabelbeins abstützt, benötigt keine Gleitoberfläche und sorgt daher zu dem dafür, dass das Teleskopfedergabelbein eine kostengünstige Ausgestaltung aufweist.

Die Ausgestaltung des Teleskopdämpfergabelbeins als Doppelstangendämpfer sorgt dafür, dass eine zusätzliche Gasdruckeinrichtung nicht benötigt wird und in Zugrichtung sowie in Druckrichtung Dämpferkräfte entsprechend dem Einsatzzweck des mit der erfindungsgemäßen Teleskopfedergabel versehenen Motorrads bereitgestellt werden können. Die großen Stangendurchmesser des Teleskopdämpfergabelbeins sorgen dafür, dass sich der Durchfluss an Druckfluid durch die Ventilbaugruppe reduzieren lässt, was insbesondere für den Offroad Einsatz von Vorteil ist. In der hohlen Kolbenstange kann die Wegmesseinrichtung geschützt integriert werden und aufgrund der Notwendigkeit, nur eine Steckerverbindung vorzusehen, ist zusätzlich die Störungsanfälligkeit dieser Verbindung durch externe Einflüsse reduziert.

Bei der Einfederbewegung werden beide Druckkammern des Doppelstangendämpfers unter Druck gesetzt, eine zusätzliche Gasdruckeinrichtung ist daher nicht notwendig. Durch die Integration der Sensoreinrichtung in der hohlen Kolbenstange ist die Sensoreinrichtung gut gegen Umwelteinflüsse geschützt und die Integration des Ringmagneten in den Deckel des Innenrohrs, bei dem es sich um einen Schraubdeckel handeln kann, wird dafür gesorgt, dass die Relativdrehwinkellage des Ringmagneten relativ zur Sensoreinrichtung keinen Einfluss auf die Wegerfassung durch die 3D Hallsensoren ausübt.

Hinsichtlich vorstehend im Einzelnen nicht näher erläuterter Merkmale der Erfindung wird im Übrigen ausdrücklich auf die Patentansprüche und die Zeichnung verwiesen.

Bezugszeichenliste

1. Teleskopfedergabel
2. Teleskopgabelbein
3. Teleskopfedergabelbein
4. Teleskopdämpfergabelbein

5. obere Gabelbrücke
6. untere Gabelbrücke
7. Außenrohr
8. Innenrohr
9. Motorrad
10. Federeinrichtung
11. Hauptfeder
12. unterer Endbereich
13. Klemmfaust
14. Vorderradachse
15. Druckstange
16. Aufnahme
17. Deckel
18. O-Ring
19. Deckel
20. Durchlass
21. Außenumfangsrand
22. Dämpfereinrichtung
23. Kolben
24. Kolbenstange
25. Wegmesseinrichtung
26. Innenraum
27. Sensoreinrichtung
28. Magneteinrichtung
29. Ringmagnet
30. Aufnahme
31. Endbereich
32. Sensorelement
33. Aufnahme
34. Doppelstangendämpfer
35. Dämpferrohr
36. Druckkammer
37. Druckkammer
38. Gehäuse
39. Innenraum, Innenausnehmung
40. Platine
41. Hallsensor
42. Anschlussleitungen
43. Solenoid
44. Federscheiben
45. Drehachse
46. Aufnahme
47. Innenausnehmung
48. Endbereich
49. Endbereich
50. hülsenförmiger Körper
51. Endbereich
52. Beschleunigungssensor
53. Hochachsrichtung
54. Vergussmasse
55. Sitzbank, Fahrersattel
56. Fahrwerksregler
57. Vorderrad
58. Hinterrad
59. Antriebseinheit
301. Deckeleinrichtung
390. Endfläche
391. Anschlussmittel

392. zweite Stange
393. zylinderförmiger Magnet
394. Mittelachse
395. Zylinderhochachse

**Patentansprüche**

1. Teleskopfedergabel (1) mit zwei Teleskopgabelbeinen (2), die jeweils mit einem Außenrohr (7) mit einer Axiallängserstreckung und einem relativ dazu in Richtung der Axiallängserstreckung axial verlagerbaren Innenrohr (8) mit einer Axiallängserstreckung versehen sind, wobei ein Teleskopgabelbein (2) ein mit einer Federeinrichtung (10) versehenes Teleskopfedergabelbein (3) ist und ein Teleskopgabelbein (2) ein mit einer Dämpfereinrichtung (22) versehenes Teleskopdämpfergabelbein (4) ist, welches einen an einer Kolbenstange (24) angeordneten Kolben (25) aufweist, und die Teleskopfedergabel (1) mit einer Wegmesseinrichtung (25) versehen ist, welche zur Erfassung der Wegstrecke der Axialverlagerung des Innenrohrs (8) relativ zum Aussenrohr (7) eingerichtet ist, **dadurch gekennzeichnet, dass** die Wegmesseinrichtung (25) eine in einem Innenraum (26) der Kolbenstange (24) angeordnete magnetooperative Sensoreinrichtung (27) und mindestens eine zur Sensoreinrichtung (27) radial beabstandete Magneteinrichtung (28) aufweist.

2. Teleskopfedergabel (1) nach Anspruch 1, **dadurch gekennzeichnet, dass** das Innenrohr (8) des Teleskopdämpfergabelbeins (4) einen im Außenrohr (7) angeordneten Endbereich (31) aufweist und der Endbereich (31) mit einer Deckeleinrichtung (301) versehen ist, welcher von der Kolbenstange (24) durchsetzt ist und sich die Magneteinrichtung (28) an einem Aussenumfangsbereich der Deckeleinrichtung (301) drehfest angeordnet befindet.

3. Teleskopfedergabel (1) nach Anspruch 1 oder 2, **dadurch gekennzeichnet, dass** die Sensoreinrichtung (27) ein langgestrecktes Gehäuse (38) mit einer Innenausnehmung (39) aufweist, in der eine langgestreckte Platine (40) mit entlang der Längsrichtung der Platine (40) im Abstand zueinander angeordneten Hallsensoren (41) angeordnet ist und die Platine (40) mit den Hallsensoren (41) in der Innenausnehmung (39) mit einer Vergussmasse (54) vergossen sind.

4. Teleskopfedergabel (1) nach Anspruch 3, **dadurch gekennzeichnet, dass** das Gehäuse (38) mit einem Kunststoffwerkstoff gebildet ist und an beiden gegenüberliegenden Endbereichen eine Endfläche (390) aufweist, welche kreisförmig ausgebildet ist und eine Endfläche (390) mit einem Durchlass versehen ist, welcher zur Aufnahme von elektrischen Anschlussmitteln (391) eingerichtet ist.

5. Teleskopfedergabel (1) nach einem der vorstehenden Ansprüche, **dadurch gekennzeichnet, dass** die Sensoreinrichtung (27) entlang der Drehachse (45) der Kolbenstange (24) angeordnet ist und zur Erfassung des dreidimensionalen Magnetfelds der sich relativ zur Sensoreinrichtung (27) bewegenden Magneteinrichtung (28) ausgebildet ist.

6. Teleskopfedergabel (1) nach einem der vorstehenden Ansprüche, **dadurch gekennzeichnet, dass** die Sensoreinrichtung (27) einen Beschleunigungssensor (52) aufweist, der zur Erfassung der Beschleunigung des Fahrzeugaufbaus eines mit der Teleskopfedergabel (1) versehenen Fahrzeugs, insbesondere Motorrads (9) eingerichtet ist.

7. Teleskopfedergabel (1) nach einem der vorstehenden Ansprüche, **dadurch gekennzeichnet, dass** das Teleskopfedergabelbein (3) an einem Endbereich (12) eine Klemmfaust (13) für eine Vorderradachse (14) eines Motorrads (9) aufweist und am in Längsrichtung des Teleskopfedergabelbeins (3) gegenüberliegenden Endbereich einen das Aussenrohr (7) verschliessenden Deckel (17) besitzt, der an einer dem Endbereich des Innenrohrs (8) gegenüberliegenden Fläche mit einem O-Ring (18) versehen ist.

8. Teleskopfedergabel (1) nach einem der vorstehenden Ansprüche, **dadurch gekennzeichnet, dass** das Teleskopfedergabelbein (3) an einem Endbereich des Innenrohrs (8) einen mit einem Durchlass zur Aufnahme einer Druckstange (15) versehenen Deckel (19) aufweist und sich die Federeinrichtung (10) an einem Endbereich an der Druckstange (15) abstützt und am gegenüberliegenden Endbereich an einem im Innenrohr angeordneten hülsenförmigen Körper (50) abstützt.

9. Teleskopfedergabel (1) nach einem der vorstehenden Ansprüche, **dadurch gekennzeichnet, dass** das Teleskopdämpfergabelbein (4) als Doppelstangendämpfer (34) ausgebildet ist und eine in einem Dämpferrohr (35) angeordnete zweite Stange (392) besitzt, welche sich am Dämpferkolben (23) abstützt und deren Aussendurchmesser kleiner ist als der Aussendurchmesser der Kolbenstange (24).

10. Teleskopfedergabel (1) nach einem der vorstehenden Ansprüche, **dadurch gekennzeichnet, dass** das Teleskopdämpfergabelbein (4) eine elektrisch betätigbare Magnetspule (43) aufweist.

11. Teleskopfedergabel (1) nach einem der vorstehenden Ansprüche 3 bis 9 und Anspruch 10, **dadurch gekennzeichnet, dass** die Anschlussmittel (391) eine elektrische Anschlussleitung für die Bestromung der elektrisch betätigbaren Magnetspule (43) umfassen.

12. Teleskopfedergabel (1) nach einem der vorstehenden Ansprüche, **gekennzeichnet durch** mindestens eine Gabelbrücke(5, 6), welche zur Aufnahme der Teleskopgabelbeine (2) eingerichtet ist.

13. Motorrad (9) mit einem Vorderrad (57) und einem Hinterrad (58) sowie einem Fahrersattel (55) und einer Antriebseinheit (59), **gekennzeichnet durch** eine Teleskopfedergabel (1) nach einem der Anspruch 1 bis 12.

FIG. 1

FIG. 2    FIG. 3

FIG. 4

16

3

11

51

50

13

FIG. 5

FIG. 6

FIG. 7

FIG. 8

EP 4 549 776 A1

EUROPÄISCHER RECHERCHENBERICHT

**Nummer der Anmeldung**

EP 24 20 8257

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | IT SA20 110 021 A1 (SPRING OFF S R L) 23. Dezember 2011 (2011-12-23) | 1,2,5,7, 10,12,13 | INV. F16F9/32 |
| Y | * Abbildungen 1-6 * | 3,4,6,8, 11 | F16F9/18 F16F9/20 B62K25/08 |
| Y | US 6 401 883 B1 (NYCE DAVID S [US] ET AL) 11. Juni 2002 (2002-06-11) * Zusammenfassung; Abbildungen 1-7, 10, 12 * | 3,4,11 | B62J45/41 B62J45/42 |
| Y | WO 2020/179681 A1 (KYB CORP [JP]) 10. September 2020 (2020-09-10) | 11 | |
| A | * Zusammenfassung; Abbildungen 1-4 * | 1,10 | |
| Y | US 2020/376915 A1 (ROESSLE MATTHEW L [US]) 3. Dezember 2020 (2020-12-03) * Zusammenfassung; Abbildungen 2, 4, 9-12 * * Absatz [0073] - Absatz [0081] * | 6 | |
| Y | US 2016/280315 A1 (MURAKAMI YOSUKE [JP]) 29. September 2016 (2016-09-29) | 8 | RECHERCHIERTE SACHGEBIETE (IPC) |
| A | * Zusammenfassung; Abbildungen 1-5 * | 1 | F16F B62K |
| A | US 2009/261555 A1 (TOMIUGA TAKESHI [JP] ET AL) 22. Oktober 2009 (2009-10-22) * Zusammenfassung; Abbildungen 1, 2 * * Absatz [0147] * | 6 | B62J B60G |
| A | DE 10 2021 130656 A1 (INVENTUS ENG GMBH [AT]) 25. Mai 2022 (2022-05-25) * Zusammenfassung; Abbildungen 1-10 * | 1,9 | |
| A | DE 103 17 619 B3 (ZF SACHS AG [DE]) 3. Februar 2005 (2005-02-03) * Zusammenfassung; Abbildung 1 * * Absatz [0012] - Absatz [0014] * * Absatz [0020] * | 1-12 | |

-/--

Der vorliegende Recherchenbericht wurde für alle Patentansprüche erstellt

| Recherchenort | Abschlußdatum der Recherche | Prüfer |
|---|---|---|
| Den Haag | 13. März 2025 | Maroño Martínez, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................................
& : Mitglied der gleichen Patentfamilie, übereinstimmendes Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 24 20 8257

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 2 599 706 A2 (BAYERISCHE MOTOREN WERKE AG [DE]) 5. Juni 2013 (2013-06-05) * Zusammenfassung; Abbildungen 1a-2b * ----- | 8 | |

RECHERCHIERTE
SACHGEBIETE (IPC)

Der vorliegende Recherchenbericht wurde für alle Patentansprüche erstellt

| Recherchenort | Abschlußdatum der Recherche | Prüfer |
|---|---|---|
| Den Haag | 13. März 2025 | Maroño Martínez, J |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

....................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**
EP 24 20 8257

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-03-2025

| Im Recherchenbericht angeführtes Patentdokument | Datum der Veröffentlichung | Mitglied(er) der Patentfamilie | Datum der Veröffentlichung |
|---|---|---|---|
| IT SA20110021 A1 | 23-12-2011 | ----------------------------------- | |
| US 6401883 B1 | 11-06-2002 | KEINE | |
| WO 2020179681 A1 | 10-09-2020 | JP 7051738 B2 | 11-04-2022 |
| | | JP 2020143681 A | 10-09-2020 |
| | | WO 2020179681 A1 | 10-09-2020 |
| US 2020376915 A1 | 03-12-2020 | KEINE | |
| US 2016280315 A1 | 29-09-2016 | EP 3073144 A1 | 28-09-2016 |
| | | JP 6546424 B2 | 17-07-2019 |
| | | JP 2016185735 A | 27-10-2016 |
| | | US 2016280315 A1 | 29-09-2016 |
| US 2009261555 A1 | 22-10-2009 | EP 2110300 A2 | 21-10-2009 |
| | | JP 5180129 B2 | 10-04-2013 |
| | | JP 2009275912 A | 26-11-2009 |
| | | US 2009261555 A1 | 22-10-2009 |
| DE 102021130656 A1 | 25-05-2022 | KEINE | |
| DE 10317619 B3 | 03-02-2005 | KEINE | |
| EP 2599706 A2 | 05-06-2013 | DE 102011086772 A1 | 23-05-2013 |
| | | EP 2599706 A2 | 05-06-2013 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2036746 B1

- EP 1964696 B1